# EUROPÄISCHE PATENTSCHRIFT

(11) **EP 3 497 327 B1**
(45) Veröffentlichungstag und Bekanntmachung des Hinweises auf die Patenterteilung: **13.05.2020**
(21) Anmeldenummer: 17754314.7
(22) Anmeldetag: 09.08.2017
(51) Int. Cl.: F03D 80/00, F03D 80/10, F03D 80/30, F03D 80/40

(54) **LEUCHTELEMENT UND VERFAHREN ZUR BELEUCHTUNG EINES BAUTEILS EINER WINDENERGIEANLAGE, SOWIE BAUTEILE FÜR EINE WINDENERGIEANLAGE UND WINDENERGIEANLAGE**
LUMINOUS ELEMENT AND METHOD FOR ILLUMINATING A COMPONENT OF A WIND ENERGY INSTALLATION, AND COMPONENTS FOR A WIND ENERGY INSTALLATION AND WIND ENERGY INSTALLATION
ÉLÉMENT LUMINEUX ET PROCÉDÉ PERMETTANT D'ÉCLAIRER UN ÉLÉMENT STRUCTURAL D'UNE ÉOLIENNE, AINSI QU'ÉLÉMENTS STRUCTURAUX POUR UNE ÉOLIENNE ET ÉOLIENNE

(30) Priorität: 09.08.2016 DE 102016114717
(43) Veröffentlichungstag der Anmeldung: 19.06.2019
(73) Patentinhaber: Wobben Properties GmbH, 26607 Aurich (DE)
(72) Erfinder: HARMS, Stephan, 26529 Upgant-Schott (DE); HOFFMANN, Alexander, 26721 Emden (DE); GROENHAGEN, Jannes, 26623 Südbrookmerland (DE); VINKE, Daniel, 26607 Aurich (DE); SZYMKOWIAK, Felix, 49843 Uelsen (DE)
(74) Vertreter: Eisenführ Speiser
(86) Internationale Anmeldenummer: PCT/EP2017/070252
(87) Internationale Veröffentlichungsnummer: WO 2018/029281

(56) Entgegenhaltungen:
- EP-A2- 2 921 766
- DE-C- 676 166

## Beschreibung

Die Erfindung betrifft ein Leuchtelement zur Beleuchtung eines Bauteils einer Windenergieanlage, insbesondere eines Rotorblatts und/oder eines Rotors und/oder eines Turms und/oder einer Gondel. Ferner betrifft die Erfindung ein Bauteil für eine Windenergieanlage, insbesondere ein Rotorblatt und/oder einen Rotor und/oder eine Gondel und/oder einen Turm für eine Windenergieanlage. Die Erfindung betrifft ferner eine Windenergieanlage und ein Verfahren zur Beleuchtung eines Bauteils einer Windenergieanlage.

Windenergieanlagen und ihre Bauteile, wie beispielsweise Rotorblätter (insbesondere Rotorblattspitzen), Rotoren (hier im Sinne eines aerodynamischen Rotors) mit einer Nabe und einem oder mehreren Rotorblättern, Türme und/oder Gondeln, erfordern eine Beleuchtung, die auch als Befeuerung bezeichnet werden kann. Diese Beleuchtung oder Befeuerung dient insbesondere zur Absicherung des Flugverkehrs in der Nähe von einzelnen Windenergieanlagen oder Windparks bestehend aus mehreren Windenergieanlagen. Eine solche Beleuchtung oder Befeuerung ist insbesondere nachts und/oder bei schlechten Sichtverhältnissen von Vorteil, kann aber auch tagsüber gewünscht sein, je nach Umgebung der Windenergieanlage und/oder Erfordernissen des Flugverkehrs. Existierende Lösungen sind beispielsweise aus der WO 2006/077084 A1 oder der WO 2012/038296 A1, insbesondere für den Offshore-Bereich, bekannt. Weitere Verbesserungen sind jedoch wünschenswert.

Das Deutsche Patent- und Markenamt hat in der Prioritätsanmeldung zu vorliegender Anmeldung folgenden Stand der Technik recherchiert: DE 10 2013 110 857 A1, DE 676 166 A, US 2005/0 052 869 A1.

Es ist daher eine Aufgabe der vorliegenden Erfindung, ein Leuchtelement und ein Verfahren zur Beleuchtung eines Bauteils einer Windenergieanlage sowie ein Bauteil einer Windenergieanlage und eine Windenergieanlage bereitzustellen, welche gegenüber existierenden Lösungen verbessert sind. Insbesondere ist eine Aufgabe der vorliegenden Erfindung, ein Leuchtelement und ein Verfahren zur Beleuchtung eines Bauteils einer Windenergieanlage sowie ein Bauteil einer Windenergieanlage und eine Windenergieanlage bereitzustellen, welche eine zuverlässige und/oder wenig störende Beleuchtung ermöglichen. Ferner ist eine Aufgabe der vorliegenden Erfindung, ein Leuchtelement und ein Verfahren zur Beleuchtung eines Bauteils einer Windenergieanlage sowie ein Bauteil einer Windenergieanlage und eine Windenergieanlage bereitzustellen, welche eine großflächige Beleuchtung von Bauteilen von Windenergieanlagen ermöglichen und/oder die Wartung vereinfachen und/oder verbessern.

Die eingangs genannte Aufgabe wird gemäß einem ersten Aspekt der Erfindung gelöst durch ein Leuchtelement zur Beleuchtung eines Bauteils einer Windenergieanlage, insbesondere eines Rotorblatts und/oder eines Rotors und/oder eines Turms und/oder einer Gondel, umfassend einen Leuchtabschnitt und einen Anschlussabschnitt, wobei der Anschlussabschnitt angeordnet und ausgebildet ist, in einem Inneren des Bauteils angeschlossen zu werden, und der Leuchtabschnitt angeordnet und ausgebildet ist, aus einer Öffnung des Bauteils herauszuragen, und der Leuchtabschnitt angeordnet und ausgebildet ist, das Bauteil, aus dem er herausragt, anzustrahlen.

Das Leuchtelement gemäß der Erfindung ist aufgrund seiner Ausbildung mit einem Leuchtabschnitt und einem Anschlussabschnitt geeignet, aus einer Öffnung eines Bauteils einer Windenergieanlage mit dem Leuchtabschnitt heraus zu ragen, während der Anschlussabschnitt in einem Inneren des Bauteils angeordnet ist und dort angeschlossen werden kann. Die Öffnung des Bauteils einer Windenergieanlage ist vorzugsweise eine Montageöffnung eines Rotorblatts einer Windenergieanlage, wobei die Montageöffnung bei der Montage des Rotorblatts an einer Windenergieanlage zur Aufnahme eines Hebezeugs dient.

Insbesondere kann das Leuchtelement auch von einem Inneren des Bauteils aus durch die Öffnung in der Bauteilwand gesteckt werden, so dass die Installation und/oder Wartung und/oder ein Austausch der Leuchtelemente einfach und kostengünstig, insbesondere auch mit einer geringeren oder keinen Abhängigkeit von den Wetterverhältnissen, erfolgen kann. Zudem ermöglicht dies auch eine einfache und kostengünstige Nachrüstung von Bauteilen einer Windenergieanlage.

Der Anschlussabschnitt kann vorzugsweise in einem Inneren des Bauteils an für die Beleuchtung erforderliche Versorgungsleitungen angeschlossen werden, beispielsweise mittels eines Steckers. Vorzugsweise sind die Versorgungsleitungen mit einer zentralen Steuerung verbunden, welche die Ansteuerung der Leuchtelemente übernimmt. Vorzugsweise kann so auf eine Elektronik innerhalb des Leuchtelements verzichtet werden, wodurch das Leuchtelement selbst noch einmal kostengünstiger und einfacher wird.

Das Bauteil, an dem das erfindungsgemäße Leuchtelement angeordnet wird, weist vorzugsweise ein hohles Inneres auf, insbesondere einen inneren Hohlraum oder Innenraum, der vorzugsweise begehbar ist, beispielsweise von Servicepersonal. Ferner können in diesem Inneren des Bauteils vorzugsweise Versorgungsleitungen und Ähnliches geführt sein, um das Leuchtelement und/oder andere Funktionselemente zu versorgen, beispielsweise mit Energie.

Ein Funktionselement kann beispielsweise ein Element sein, welches eine für den Betrieb einer Windenergieanlage vorteilhafte Funktion erfüllt. Vorzugsweise verschließt das Funktionselement eine Montageöffnung eines Rotorblatts einer Windenergieanlage und/oder ragt aus dieser hinaus. Vorzugsweise hat das Funktionselement über den, vorzugsweise abgedichteten, Verschluss der Montageöffnung hinaus mindestens eine weitere Funktion. Ein Funktionselement kann beispielsweise als Sensor, z.B. zur Bestimmung von Geschwindigkeit und/oder Feuchtigkeit und/oder Licht und/oder Temperatur und/der Wetterdaten, und/oder als Kamera und/oder als Vortexgenerator und/oder als Blitzschutzvorrichtung und/oder als Heizvorrichtung ausgebildet sein.

Eine weitere Besonderheit des Leuchtelements ist es, dass der Leuchtabschnitt angeordnet und ausgebildet ist, ein Bauteil, aus dem er herausragt, anzustrahlen, vorzugweise mit einer elektromagnetischen Strahlung. Existierende Beleuchtungseinrichtungen, wie beispielsweise aus der WO 2006/077084 A1, sind darauf ausgelegt, elektromagnetische Strahlung abzustrahlen in die Umgebung der Windenergieanlage, dienen also dazu, dass von außen (beispielsweise von einem Fluggerät aus) die an der Windenergieanlage bzw. einem Bauteil davon angebrachte Beleuchtung direkt wahrzunehmen, da die Beleuchtung nach außen abstrahlt. Das erfindungsgemäße Leuchtelement hingegen sieht vor, dass das Bauteil der Windenergieanlage, aus dessen Öffnung das Leuchtelement herausragt, vom Leuchtelement angestrahlt wird. Der Leuchtabschnitt des Leuchtelements befindet sich somit außerhalb des Bauteils bzw. auf dessen Außenseite und ist angeordnet und ausgebildet, um das Bauteil von außen anzustrahlen.

Auf diese Weise kann das Bauteil die elektromagnetische Strahlung, mit der es vom Leuchtelement angestrahlt wird, reflektieren. So kann von außen (beispielsweise von einem Fluggerät aus) das angestrahlte Bauteil wahrgenommen werden, also ein deutlich größerer Teil der Windenergieanlage als lediglich eine Beleuchtungseinrichtung selbst.

Das erfindungsgemäße Leuchtelement hat somit insbesondere den Vorteil, dass nicht nur eine punktuelle, direkte Befeuerung der Windenergieanlage und ihren Bauteilen erfolgt, sondern durch die Anstrahlung das Bauteil im gesamten angestrahlten Bereich befeuert und somit von außen, beispielsweise von einem Fluggerät aus, wahrgenommen werden kann.

Das erfindungsgemäße Leuchtelement hat insbesondere Vorteile an Standorten von Windenergieanlagen, bei denen das Erfordernis besteht, mit Fluggeräten sehr nah, teilweise bis auf 50 m, an die Windenergieanlage heran zu fliegen bzw. in einem solchen Abstand an der Windenergieanlage vorbei zu fliegen. Ein solches Erfordernis ergibt sich beispielsweise in Bergregionen, in denen zunehmend Windenergieanlagen aufgestellt werden. Aufgrund der Topologie, wie beispielsweise enge Täler, ist ein weiträumiges Umfliegen der Windenergieanlage oft nicht möglich, insbesondere beispielsweise bei Rettungseinsätzen im Gebirge. Ferner sind gerade auch militärisch genutzte Fluggeräte oft mit hohen Geschwindigkeiten unterwegs, die eine entsprechende Befeuerung von Windenergieanlagen erfordern. Hier erweist sich das erfindungsgemäße Leuchtelement als besonders vorteilhaft, da nicht nur eine punktuelle Beleuchtung der Windenergieanlage durch nach außen abstrahlende Lichtquellen vorgesehen ist, sondern durch die erfindungsgemäße Anstrahlung des Bauteils ein deutlich größerer Bereich sichtbar gemacht werden kann, beispielsweise für Piloten. Insbesondere kann mit dem erfindungsgemäßen Leuchtelement auf einfache und zuverlässige Weise eine Beleuchtung des gesamten Rotors und/oder der Rotorblätter, insbesondere bis hin zur Blattspitze, erfolgen. Auf diese Weise kann die Windenergieanlage mit dem sich drehenden Rotor als Gesamthindernis wahrgenommen und insbesondere auch der Rotordurchmesser vom Piloten erkannt werden, um eine sichere Navigation auch in nächster Nähe und der unmittelbaren Umgebung der Windenergieanlage zu ermöglichen.

Ein weiterer Vorteil der Erfindung ist es, dass durch die Anordnung des Leuchtelements am anzustrahlenden Bauteil eine besonders effiziente Lösung bereitgestellt wird, insbesondere auch im Hinblick auf den Energieverbrauch. Die Erfindung ermöglicht vorzugsweise besonders kurze Montagedistanzen, also die Anordnung des Leuchtelements nahe am anzustrahlenden Bauteil bzw. Bauteilbereich. Die Erfindung hat auch den Vorteil, dass durch die Anordnung des Leuchtelements am anzustrahlenden Bauteil eine gezielte Anstrahlung des Bauteils erfolgen kann und/oder Streuverluste bei der Beleuchtung reduziert werden können, was insbesondere bei rotierenden Bauteilen einen Vorteil darstellt.

Dabei ist insbesondere bevorzugt, dass der Leuchtabschnitt angeordnet und ausgebildet ist, einen Bereich von mindestens 20%, vorzugsweise mindestens 30%, des Bauteils und/oder der Seite des Bauteils, aus dem er herausragt und/oder auf der die Öffnung angeordnet ist, anzustrahlen.

In einer bevorzugten Ausführungsform ist vorgesehen, dass der Leuchtabschnitt angeordnet und ausgebildet ist, das Bauteil, aus dem er herausragt, mit einer elektromagnetischen Strahlung im Bereich von sichtbarem Licht, insbesondere gelbem und/oder rotem und/oder weißem Licht und/oder im Bereich von Infrarotstrahlung anzustrahlen.

Der Bereich des sichtbaren Lichts weist vorzugsweise Wellenlängen von etwa 380 nm bis 780 nm auf, was Frequenzen von etwa 789 THz bis 384 THz entspricht. Der Bereich von gelbem und/oder rotem Licht weist vorzugsweise Wellenlängen von etwa 570 nm bis 780 nm auf, was Frequenzen von etwa 525 THz bis 384 THz entspricht. Unter weißem Licht wird hier insbesondere eine elektromagnetische Strahlung im Bereich von sichtbarem Licht verstanden, bei der mehrere Wellenlängenbereiche überlagert sind.

Unter Infrarotstrahlung wird hier insbesondere der Spektralbereich zwischen 1 mm und 700 nm bezeichnet, was einem Frequenzbereich von 300 GHz bis 430 THz entspricht. Besonders bevorzugt ist ein Spektralbereich zwischen 800nm und 850nm.

Sichtbares Licht ist für die Befeuerung bevorzugt, um die Navigation auch im Sichtflug zu erleichtern. Eine Anstrahlung der Bauteile mit elektromagnetischer Strahlung im Infrarotbereich ist bevorzugt, da diese Art der Anstrahlung optisch unauffällig ist, unabhängig von Lichtverhältnissen einsetzbar ist und insbesondere auch für Fluggeräte im militärischen Bereich zuverlässig erkennbar ist.

Ferner ist vorzugsweise vorgesehen, dass der Leuchtabschnitt eine oder mehrere Leuchtdioden aufweist. Leuchtdioden zur Emission von sichtbarem Licht und/oder Infrarotstrahlung sind relativ preisgünstig und mit großer Lichtstärke erhältlich und besitzen ferner eine lange Lebensdauer.

Es ist ferner bevorzugt, dass der Leuchtabschnitt eine aerodynamische Außenform aufweist, beispielsweise eine Tropfenform. Dies kann beispielsweise durch eine Verkleidung des Leuchtabschnitts realisiert werden. Eine solche aerodynamische Außenform ist insbesondere bei der Anordnung von Leuchtelementen an beweglichen, insbesondere drehenden, Bauteilen einer Windenergieanlage, insbesondere den Rotorblättern, bevorzugt, um eine Erhöhung des Luftwiderstands durch das Anordnen der Leuchtelemente möglichst gering zu halten.

Ferner ist vorzugsweise vorgesehen, dass der Leuchtabschnitt eine Außenform aufweist, die Wirbel erzeugt und/oder einen Abriss einer Luftströmung verhindert oder reduziert. Auch dies kann beispielsweise durch eine entsprechende Verkleidung des Leuchtabschnitts realisiert werden. Der Leuchtabschnitt kann hierzu beispielsweise einen oder mehrere Vortexgeneratoren aufweisen.

Eine weitere bevorzugte Fortbildung zeichnet sich dadurch aus, dass das Leuchtelement zwischen dem Leuchtabschnitt und dem Anschlussabschnitt einen Dichtungsabschnitt aufweist, der ausgebildet und angeordnet ist, die Öffnung des Bauteils, aus dem das Leuchtelement, insbesondere der Leuchtabschnitt, herausragt, dichtend zu verschließen. Das Leuchtelement kann ferner beispielsweise eine Hülse und/oder ein oder mehrere Führungselemente aufweisen, welche eine korrekte bzw. gewünschte Positionierung des Leuchtelements relativ zum Bauteil, aus dem das Leuchtelement mit seinem Leuchtabschnitt herausragt, und das vom Leuchtabschnitt angestrahlt werden soll, sicherzustellen, beispielsweise auch hinsichtlich eines gewünschten bzw. erforderlichen Abstrahlwinkels.

Das Leuchtelement, insbesondere der Dichtungsabschnitt, weist vorzugsweise einen Außendurchmesser von mindestens oder maximal 100mm auf, insbesondere einen Durchmesser von 120-130mm, beispielsweise einen Durchmesser von 122mm, oder einen Durchmesser von maximal 200mm, und/oder ist für den Einsatz in einer Öffnung mit einem solchen Durchmesser geeignet.

In einer weiteren bevorzugten Ausführungsform ist vorgesehen, dass das Leuchtelement als Stableuchte und/oder Tellerleuchte ausgebildet ist.

Ferner ist vorzugsweise vorgesehen, dass der Leuchtabschnitt eine abgerundete und/oder geneigte Strahlfläche aufweist. Die Strahlfläche ist vorzugsweise durchlässig für die vom Leuchtabschnitt emittierte elektromagnetische Strahlung.

Eine weitere bevorzugte Fortbildung zeichnet sich dadurch aus, dass der Leuchtabschnitt, insbesondere eine Strahlfläche des Leuchtabschnitts, um einen vorbestimmten Abstand aus dem Bauteil herausragt, vorzugsweise um mindestens 10 cm, mindestens 20 cm, mindestens 30 cm, mindestens 40 cm, oder mindestens 50 cm und/oder maximal 1m.

Dabei ist insbesondere bevorzugt, dass der Leuchtabschnitt einen Abstrahlwinkel von 3° bis 15°, insbesondere einen Abstrahlwinkel von größer als 5° oder größer als 10° und/oder einen Abstrahlwinkel von kleiner als 15° oder kleiner als 12° aufweist.

Eine weitere bevorzugte Weiterbildung ist gekennzeichnet durch eine Blitzschutzvorrichtung und/oder eine Heizvorrichtung. Diese Anordnung ist bevorzugt, um Blitzschäden und/oder Beeinträchtigungen durch Vereisung vorzubeugen. Da im Inneren des Bauteils zur Versorgung des Leuchtelements vorzugsweise ohnehin entsprechende Leitungen geführt sind, können diese in vorteilhafter Weise auch für die Blitzschutzvorrichtung und/oder die Heizvorrichtung verwendet werden.

Das Leuchtelement, insbesondere der Leuchtabschnitt und/oder der Anschlussabschnitt, kann eine Leuchtquelle aufweisen, die elektromagnetische Strahlung im Bereich von sichtbarem Licht und/oder im Bereich von Infrarotstrahlung emittieren, beispielsweise in Form von LED.

Ferner vorzugsweise ist das Leuchtelement, insbesondere der Leuchtabschnitt angeordnet und ausgebildet, eine elektromagnetische Strahlung im Bereich von sichtbarem Licht und/oder im Bereich von Infrarotstrahlung umzulenken und/oder zu reflektieren. Auf diese Weise kann etwa eine Leuchtquelle nicht am Leuchtelement selbst angeordnet sein, sondern entfernt davon, beispielsweise in einem Inneren eines Bauteils einer Windenergieanlage. Auf diese Weise kann eine besonders einfache Ausgestaltung einer Beleuchtung realsiert werden, da das Leuchtelement lediglich als passives, reflektierendes Bauteil ausgebildet sein kann, und eine Leuchtquelle beabstandet vom Leuchtelement, beispielsweise im Inneren des Bauteils der Windenergieanlage, angeordnet sein kann.

Vorzugsweise ist Leuchtelement frei von elektrischen Bauelementen, wie Leuchtquellen. Dies hat unter anderem den Vorteil, dass die Gefahr von Blitzschäden reduziert werden kann. Leuchtquellen können beispielsweise elektrisch leitfähige Materialien aufweisen. Wenn das Leuchtelement keine Leuchtquelle aufweist, sondern beispielsweise lediglich als passives Leuchtelement dient und/oder Strahlung lediglich umlenkt und/oder reflektiert, können Leuchtquellen im Inneren eines Bauteils angeordnet sein.

Das Leuchtelement kann, ganz oder teilweise, beispielsweise als Hohlstab oder hohlstabförmig ausgebildet sein. Ein Querschnitt orthogonal zu einer Längsachse des Leuchtelements kann beispielsweise rund, oval, dreieckig oder mehreckig, mit geraden und/oder gekrümmten Seiten sein.

Vorzugsweise weist das Leuchtelement eine Reflektionsfläche auf. Eine Reflektionsfläche ist vorzugsweise im Inneren des Leuchtelements, insbesondere im Inneren des Hohlstabs, angeordnet.

Vorzugsweise kann das Leuchtelement, insbesondere der Leuchtabschnitt, ganz oder teilweise aus Material ausgebildet sein, das den Durchtritt von elektromagnetischer Strahlung im Bereich von sichtbarem Licht und/oder im Bereich von Infrarotstrahlung verhindert oder deutlich reduziert. Das Leuchtelement, insbesondere der Leuchtabschnitt, umfasst ferner vorzugsweise einen Leuchtbereich, der als Ausnehmung ausgebildet ist und/oder aus einem Material besteht, das den Durchtritt von elektromagnetischer Strahlung im Bereich von sichtbarem Licht und/oder im Bereich von Infrarotstrahlung erlaubt. Der Leuchtbereich kann beispielsweise schlitzförmig ausgebildet sein. Auf diese Weise kann der Austritt von elektromagnetischer Strahlung im Bereich von sichtbarem Licht und/oder im Bereich von Infrarotstrahlung auf den Leuchtbereich fokussiert werden, wodurch sich eine besonders fokussierte Beleuchtung ergeben kann.

Das Leuchtelement ist vorzugsweise aus nicht elektrische leitfähigem Material ausgebildet oder weist, insbesondere zu einem Großteil, nicht elektrisch leitfähiges Material auf. Vorzugsweise besteht das Leuchtelement aus einem faserverstärkten Verbundwerkstoff, insbesondere aus einem Faser-Kunststoff-Verbund, vorzugsweise aufweisend oder bestehend aus Kunststoff und Glasfasern.

Gemäß einem weiteren Aspekt der Erfindung wird die eingangs genannte Aufgabe gelöst durch ein Bauteil für eine Windenergieanlage, insbesondere Rotorblatt und/oder Rotor und/oder Gondel und/oder Turm für eine Windenergieanlage, umfassend eine Öffnung, insbesondere eine Montageöffnung, die bei der Montage des Rotorblatts an einer Windenergieanlage zur Aufnahme eines Hebezeugs dient, ein zuvor beschriebenes Leuchtelement, dessen Leuchtabschnitt aus der Öffnung herausragt, und/oder ein Funktionselement, das aus der Öffnung herausragt und/oder die Öffnung verschließt.

Ein Funktionselement kann beispielsweise ein Element sein, welches eine für den Betrieb einer Windenergieanlage vorteilhafte Funktion erfüllt. Vorzugsweise verschließt das Funktionselement eine Montageöffnung eines Rotorblatts einer Windenergieanlage und/oder ragt aus dieser hinaus. Vorzugsweise hat das Funktionselement über den, vorzugsweise abgedichteten, Verschluss der Montageöffnung hinaus mindestens eine weitere Funktion. Ein Funktionselement kann beispielsweise als Sensor, z.B. zur Bestimmung von Geschwindigkeit und/oder Feuchtigkeit und/oder Licht und/oder Temperatur und/der Wetterdaten, und/oder als Kamera und/oder als Vortexgenerator und/oder als Blitzschutzvorrichtung und/oder als Heizvorrichtung ausgebildet sein.

Die Öffnung ist vorzugsweise in einer Wandung des Bauteils angeordnet, welche einen inneren Hohlraum des Bauteils umgibt. Vorzugweise ist die Öffnung eine Durchgangsöffnung, welche das Innere eines Bauteils mit der Umgebung des Bauteils verbindet. Vorzugsweise weist die Öffnung ein oder mehrere Führungs- und/oder Positionierungselemente auf, die dazu dienen, ein aus der Öffnung herausragendes Leuchtelement relativ zum Bauteil zu positionieren. Insbesondere ist es bevorzugt, dass die Öffnung derart angeordnet und ausgebildet ist, dass der aus der Öffnung herausragende Leuchtabschnitt des Leuchtelements so angeordnet und/oder ausgerichtet und/oder positioniert werden kann, dass eine Anstrahlung des Bauteils durch den Leuchtabschnitt erfolgt.

Dabei ist insbesondere bevorzugt, dass das Bauteil zwei, drei oder mehrere Öffnungen, insbesondere zwei, drei oder mehrere Montageöffnungen, und zwei, drei oder mehrere zuvor beschriebene Leuchtelemente, und/oder zwei, drei oder mehrere Funktionselemente aufweist. Bei Rotorblättern ist beispielsweise die Anordnung von mindestens einem zuvor beschriebenen Leuchtelement auf der Druckseite und die Anordnung von mindestens einem zuvor beschriebenen Leuchtelement auf der Saugseite bevorzugt. Bei einem Turm ist beispielsweise die Anordnung von zwei oder mehreren zuvor beschriebenen Leuchtelementen in im wesentlichen gleicher Höhe bezogen auf die Längserstreckung des Turms, und vorzugsweise äquidistant über den Umfang des Turmes verteilt, bevorzugt.

Insbesondere ist es bevorzugt, dass die Öffnung eine Montageöffnung ist, die bei der Montage des Rotorblatts an einer Windenergieanlage zur Aufnahme eines Hebezeugs dient.

Eine weitere bevorzugte Fortbildung des Bauteils zeichnet sich dadurch aus, dass die Öffnung in einem von Servicepersonal von innen begehbaren Bereich des Bauteils angeordnet ist. Diese Ausgestaltung ist bevorzugt, da sie eine besonders einfache und witterungsunabhängige Art für Installation, Wartung und Austausch von Leuchtelementen ermöglicht.

Ferner ist vorzugsweise vorgesehen, dass die Öffnung in einem Bereich des Bauteils angeordnet ist, der eine lichte innere Höhe von mindestens 60cm, vorzugsweise mindestens 80cm, insbesondere von mindestens 1m, aufweist. Solche Bereiche sind insbesondere als begehbare Bereiche bevorzugt.

Es ist ferner bevorzugt, dass die Öffnung einen Durchmesser von mindestens oder maximal 100mm hat, insbesondere einen Durchmesser von 120-130mm, beispielsweise einen Durchmesser von 122mm, oder einen Durchmesser von maximal 200mm. Insbesondere ist bevorzugt, dass die Öffnung im Transport- und/oder Montagezustand anderweitig genutzt werden kann. Beispielsweise haben Hebepunktöffnungen von Rotorblättern oft einen Durchmesser von 122 mm.

In einer weiteren bevorzugten Ausführungsform des Bauteils ist vorgesehen, dass das Bauteil ein Umlenkelement aufweist, welches angeordnet und ausgebildet ist, von dem Leuchtelement empfangene Strahlung umzulenken, insbesondere in Richtung des Bauteils. Das Umlenkelement kann beispielsweise als optisches Umlenkelement, beispielsweise als Prisma, ausgebildet sein und/oder ein optisches Umlenkelement, aufweisen. Auf diese Weise kann der Bereich des Bauteils, das von dem Leuchtabschnitt angestrahlt wird, in vorteilhafter Weise vergrößert werden.

Ferner ist vorzugsweise vorgesehen, dass das Bauteil eine Blitzschutzvorrichtung und/oder eine Heizvorrichtung aufweist, die am Leuchtelement oder in dessen unmittelbarer Umgebung angeordnet ist. Als unmittelbare Umgebung des Leuchtelements wird vorzugsweise ein Bereich von bis zu 1 m im Umkreis des Leuchtelements verstanden. Als Heizvorrichtung kann eine an einem Bauteil der Windenergieanlage ohnehin vorhandene Heizvorrichtung genutzt werden. Alternativ oder zusätzlich kann eine separate und/oder eigenständige Heizvorrichtung für das Leuchtelement vorgesehen sein.

In einer bevorzugten Ausführungsform ist vorgesehen, dass das Bauteil ein Rotorblatt ist.

Dabei ist insbesondere bevorzugt, dass das Leuchtelement in einem nabennahen Bereich des Rotorblatts angeordnet ist, wobei sich der nabennahe Bereich vorzugsweise über maximal 50% der Längserstreckung des Rotorblatts erstreckt, insbesondere über maximal 30%, beispielsweise über maximal 20%. Als nabennaher Bereich des Rotorblatts wird insbesondere der Bereich der Rotorblattwurzel sowie ein an die Rotorblattwurzel angrenzender Bereich verstanden. Insbesondere der nabennahe Bereich des Rotorblatts ist in der Regel noch von Servicepersonal begehbar.

Ferner ist vorzugsweise vorgesehen, dass die Öffnung derart angeordnet und ausgebildet ist, dass im Transportzustand des Rotorblatts ein Teil eines Hebewerkzeugs hindurchgeführt werden kann. Die Öffnung kann vorzugsweise als Hebepunktöffnung ausgebildet sein. Im Montage- und/oder Transportzustand ist daher vorzugsweise das Leuchtelement noch nicht in der Öffnung angeordnet, sodass die Öffnung noch zu anderen Zwecken, beispielsweise für die Befestigung eines Hebewerkzeugs, verwendet werden kann. Nach erfolgter Montage des Rotorblatts an der Rotornabe werden dann vorzugsweise ein oder mehrere Leuchtelemente in den Öffnungen installiert. Auf diese Weise können auch existierende Windenergieanlagen einfach und kostengünstig nachgerüstet werden.

Es ist ferner bevorzugt, dass das Umlenkelement zwischen dem Leuchtelement und einer Rotorblattspitze angeordnet ist. Insbesondere, um die Längserstreckung des Rotorblatts bis hin zur Blattspitze zuverlässig anstrahlen zu können, ist das Vorsehen eines Umlenkelement zwischen Leuchtelement und Rotorblattspitze bevorzugt. Das Umlenkelement kann vorzugsweise im äußeren, an die Blattspitze angrenzenden Drittel eines Rotorblatts angeordnet sein.

Ferner ist vorzugsweise vorgesehen, dass das Leuchtelement angeordnet und ausgebildet ist, das Rotorblatt bis zur Blattspitze und/oder bis zur Blattwurzel anzustrahlen. Das Leuchtelement ist vorzugsweise angeordnet und ausgebildet, dass Rotorblatt in Richtung seiner Längserstreckung, insbesondere zu Blattspitze hin und/oder zur Blattwurzel hin, anzustrahlen. Ferner vorzugsweise ist das Leuchtelement angeordnet und ausgebildet, dass Rotorblatt zur Vorderkante und/oder Hinterkante hin anzustrahlen.

Ferner vorzugsweise ist das Leuchtelement angeordnet und ausgebildet, dass Rotorblatt beginnend von einem bestimmten Bereich um das Leuchtelement herum anzustrahlen. Innerhalb eines bestimmten Umkreises um das Leuchtelement herum wird das Bauteil in der Regel nicht angestrahlt. Dieser Umkreis ergibt sich in der Regel aus dem Abstrahlwinkel, dem Abstand, um den der Leuchtabschnitt aus dem Bauteil herausragt, und der Bauteilgeometrie.

In einer weiteren bevorzugten Ausführungsform ist vorgesehen, dass das Bauteil ein Rotor ist.

Dabei ist insbesondere bevorzugt, dass die Öffnung in einer Nabe und/oder einem Spinner des Rotors angeordnet ist.

Ferner ist vorzugsweise vorgesehen, dass das Leuchtelement angeordnet und ausgebildet ist, eines oder mehrere Rotorblätter anzustrahlen, vorzugsweise von der Blattwurzel an und/oder bis zur Blattspitze.

In einer weiteren bevorzugten Ausführungsform ist vorgesehen, dass das Bauteil eine Gondel ist.

Dabei ist insbesondere bevorzugt, dass das Leuchtelement angeordnet und ausgebildet ist, eines oder mehrere Rotorblätter anzustrahlen, vorzugsweise von der Blattwurzel an und/oder bis zur Blattspitze.

In einer weiteren bevorzugten Ausführungsform ist vorgesehen, dass das Bauteil ein Turm ist.

Dabei ist insbesondere bevorzugt, dass das Leuchtelement angeordnet und ausgebildet ist, den Turm bis zum Fundament und/oder bis zum Turmkopf anzustrahlen.

Gemäß einem weiteren Aspekt der Erfindung wird die eingangs genannte Aufgabe gelöst durch eine Windenergieanlage, umfassend ein zuvor beschriebenes Bauteil, insbesondere ein Rotorblatt und/oder einen Rotor, und/oder eine Gondel und/oder einen Turm.

Gemäß einem weiteren Aspekt der Erfindung wird die eingangs genannte Aufgabe gelöst durch ein Verfahren zur Beleuchtung eines Bauteils einer Windenergieanlage, umfassend: Bereitstellen eines zuvor beschriebenen Leuchtelements, Herausführen des Leuchtabschnitts aus einer Öffnung in einem Bauteil der Windenergieanlage, insbesondere aus einer Öffnung in einem Rotorblatt und/oder einem Rotor und/oder einer Gondel und/oder einem Turm, Anstrahlen des Bauteils aus dem der Leuchtabschnitt herausragt, mit dem Leuchtabschnitt.

Das Verfahren zur Beleuchtung eines Bauteils einer Windenergieanlage umfasst ferner vorzugsweise die Montage eines Rotorblatts an einer Windenergieanlage unter Nutzung von mindestens einer Montageöffnung in dem Rotorblatt, und das Herausführen des Leuchtabschnitts aus der Montageöffnung. Vorzugsweise wird also nach der Montage des Rotorblatts an der Windenergieanlage die dafür erforderliche Montageöffnung zur Anbringung des Leuchtelements genutzt. Ein während der Montage in der Montageöffnung befindliches Hebezeug wird vorzugsweise vor der Anbringung des Leuchtelements und/oder eines Funktionselements entfernt.

Gemäß einem weiteren Aspekt der Erfindung wird die eingangs genannte Aufgabe gelöst durch die Verwendung eines zuvor beschriebenen Leuchtelements zur Beleuchtung eines Bauteils einer Windenergieanlage, insbesondere eines Rotorblatts und/oder eines Rotors und/oder eines Turms und/oder einer Gondel.

Gemäß einem weiteren Aspekt der Erfindung wird die eingangs genannte Aufgabe gelöst durch ein Verfahren zur Funktionserweiterung eines Rotorblatts einer Windenergieanlage, umfassend: Montage des Rotorblatts an einer Windenergieanlage unter Nutzung von mindestens einer Montageöffnung in dem Rotorblatt, insbesondere zur Aufnahme von Hebezeug, Anbringen eines Funktionselements in der Montageöffnung. Gemäß einem weiteren Aspekt der Erfindung wird die eingangs genannte Aufgabe gelöst durch die Verwendung einer Montageöffnung eines Rotorblatts, die bei der Montage des Rotorblatts an einer Windenergieanlage zur Aufnahme eines Hebezeugs dient, als Öffnung zur Aufnahme eines zuvor beschriebenen Leuchtelements zur Beleuchtung eines Bauteils einer Windenergieanlage, insbesondere eines Rotorblatts und/oder eines Rotors und/oder eines Turms und/oder einer Gondel und/oder zur Aufnahme eines Funktionselements, insbesondere während des Betriebs der Windenergieanlage.

Das erfindungsgemäße Bauteil und das erfindungsgemäße Verfahren und die jeweiligen möglichen Fortbildungen weisen Merkmale bzw. Verfahrensschritte auf, die sie insbesondere dafür geeignet machen, mit einem erfindungsgemäßen Leuchtelement und seinen Fortbildungen verwendet zu werden. Auch das Leuchtelement und seine jeweiligen möglichen Fortbildungen weisen Merkmale auf, die das Leuchtelement insbesondere dafür geeignet machen, mit einem erfindungsgemäßen Bauteil, eine erfindungsgemäßen Windenergieanlage und/oder dem erfindungsgemäßen Verfahren verwendet zu werden

Zu den Vorteilen, Ausführungsvarianten und Ausführungsdetails der jeweiligen Aspekte der Erfindung und ihrer möglichen Fortbildungen wird auf die Beschreibung zu den entsprechenden Merkmalen der jeweils anderen Aspekte verwiesen. Bevorzugte Ausführungsformen der Erfindung werden beispielhaft anhand der beiliegenden Figuren beschrieben. Es zeigen.
- Figur 1:: eine schematische dreidimensionale Darstellung einer Windenergieanlage;
- Figur 2:: eine schematische dreidimensionale Darstellung einer beispielhaften Ausführungsform eines erfindungsgemäßen Leuchtelements;
- Figur 3:: eine schematische Darstellung eines Leuchtabschnitts einer weiteren beispielhaften Ausführungsform eines erfindungsgemäßen Leuchtelements;
- Figur 4:: eine Draufsicht auf das Leuchtelement gemäß Figur 2 mit einer aerodynamischen Verkleidung;
- Figur 5:: eine schematische Darstellung eines Teils eines Querschnitts durch ein Rotorblatt mit einem Leuchtelement;
- Figur 6:: eine schematische Darstellung eines Teils eines Querschnitts durch ein Rotorblatt mit einem Leuchtelement und einem Umlenkelement;
- Figur 7:: eine weitere schematische Darstellung eines Teils eines Querschnitts durch ein Rotorblatt mit einem Leuchtelement;
- Figur 8:: eine schematische Darstellung eines Längsschnitts durch eine Ausführungsform eines Rotorblatts;
- Figur 9:: eine schematische Darstellung eines Längsschnitts durch eine weitere Ausführungsform eines Rotorblatts;
- Figur 10:: eine dreidimensionale Ansicht einer weiteren Ausführungsform eines Rotorblatts;
- Figur 11:: eine gebrochene dreidimensionale Ansicht eines Teils des Rotorblatts gemäß Figur 10;
- Figur 12:: einen schematischen Querschnitt des Rotorblatts gemäß Figur 10;
- Figur 13:: einen schematischen Querschnitt einer weiteren beispielhaften Ausführungsform eines Rotorblatts;
- Figur 14A:: einen schematischen Querschnitt einer weiteren beispielhaften Ausführungsform eines Rotorblatts mit Leuchtelementen in einer ersten Anordnung;
- Figur 14B:: das Rotorblatt gemäß Figur 14A mit Leuchtelementen in einer zweiten Anordnung;
- Figur 15:: ein Rotorblatt mit einem Leuchtelement mit einer Reflektionsfläche;
- Figur 16:: ein Leuchtelement mit einer Reflektionsfläche; und
- Figur 17:: eine Windenergieanlage mit Beleuchtung vom Spinner aus.

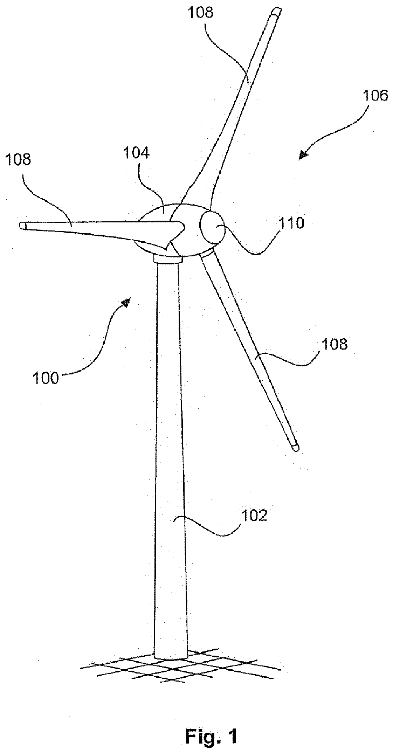

Figur 1 zeigt eine Windenergieanlage 100 mit einem Turm 102 und einer Gondel 104. An der Gondel 104 ist ein (aerodynamischer) Rotor 106 mit drei Rotorblättern 108 und einem Spinner 110 angeordnet. Der Rotor 106 wird im Betrieb durch den Wind in eine Drehbewegung versetzt und treibt dadurch einen Generator (mit einem elektrodynamischen Generator-Rotor und einem Stator, beides nicht dargestellt) in der Gondel 104 an. Ein oder mehrere Bauteile der Windenergieanlage 100, insbesondere ein oder mehrere Rotorblätter 108, der Rotor 106, der Spinner 110, die Gondel 104 oder der Turm 102 weisen eine Öffnung auf, durch der Leuchtabschnitt eines erfindungsgemäßen Leuchtelements herausragt, um das Bauteil anzustrahlen.

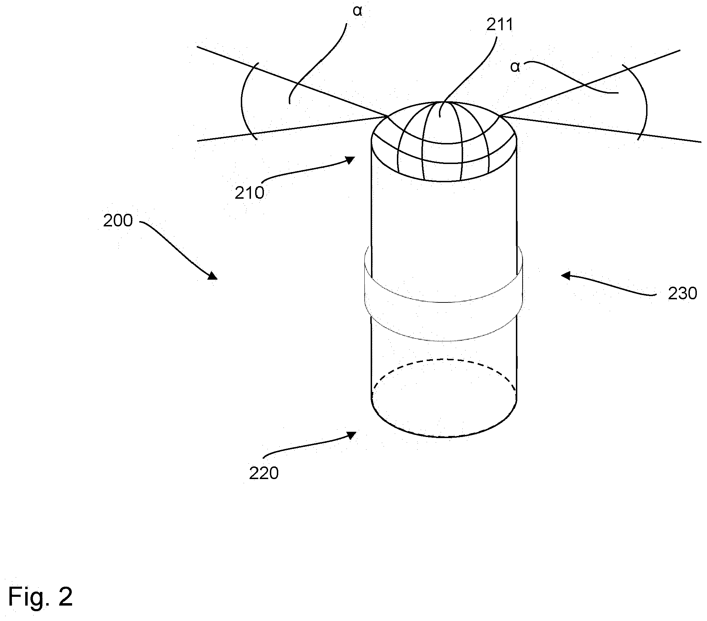

Figur 2 zeigt eine schematische dreidimensionale Darstellung einer beispielhaften Ausführungsform eines erfindungsgemäßen Leuchtelements 200 mit einem Leuchtabschnitt 210 und einem Anschlussabschnitt 220. Der Leuchtabschnitt 200 weißt eine abgerundete Strahlfläche 211 und einen Abstrahlwinkel α auf. Zwischen dem Leuchtabschnitt 210 und dem Anschlussabschnitt 220 ist ein Dichtungsabschnitt 230 angeordnet, der ausgebildet und angeordnet ist, die Öffnung des Bauteils, aus dem das Leuchtelement herausragt, dichtend zu verschließen. Die Öffnung ist vorzugsweise eine Montageöffnung eines Rotorblatts, die bei der Montage des Rotorblatts an einer Windenergieanlage zur Aufnahme eines Hebezeugs dient.

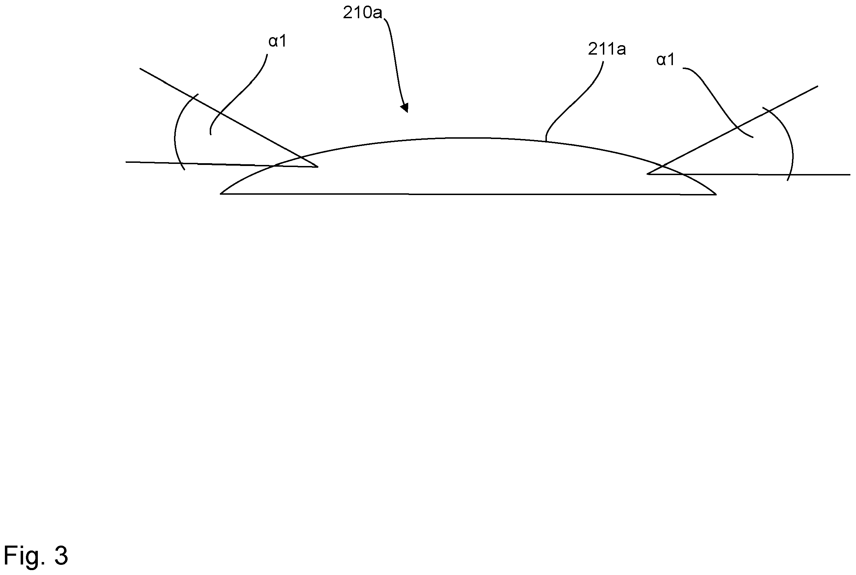

Figur 3 zeigt eine schematische Darstellung eines Leuchtabschnitts 210a einer weiteren beispielhaften Ausführungsform eines erfindungsgemäßen Leuchtelements. Der Leuchtabschnitt 210a weist ebenfalls eine abgerundete Strahlfläche 211a und ein Abstrahlwinkel α1 auf. Die Strahlfläche 211a ist jedoch deutlich flacher als die Strahlfläche 211 der Figur 2. Eine Ausführungsform eines Leuchtelements gemäß Figur 3 kann auch als Tellerleuchte bezeichnet werden, die der Figur 2 als Stableuchte.

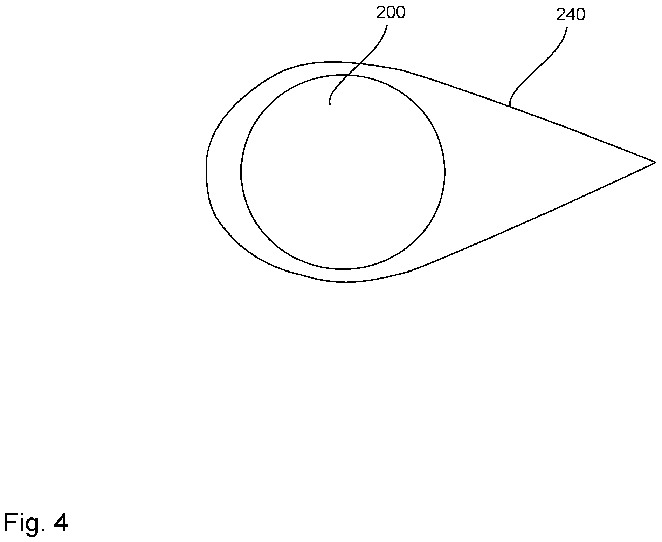

Figur 4 zeigt eine Draufsicht auf das Leuchtelement 200 gemäß Figur 2 mit einer aerodynamischen Verkleidung 240, sodass sich eine Außenform des Leuchtelements 200 in Tropfenform ergibt. Eine solche aerodynamische Verkleidung 240 ist insbesondere bei der Anordnung von Leuchtelementen 200 an beweglichen, insbesondere drehenden, Bauteilen einer Windenergieanlage, insbesondere den Rotorblättern, bevorzugt, um eine Erhöhung des Luftwiderstands durch das Anordnen der Leuchtelemente 200 möglichst gering zu halten.

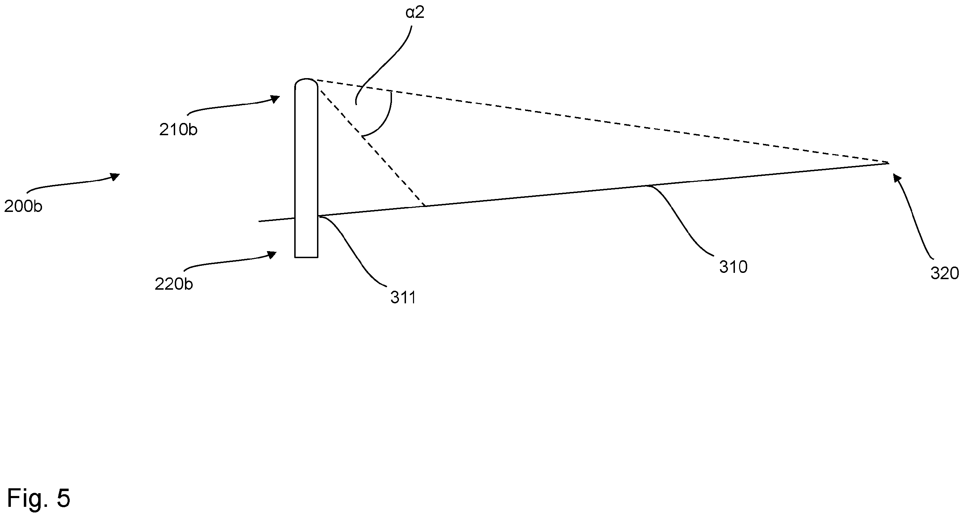

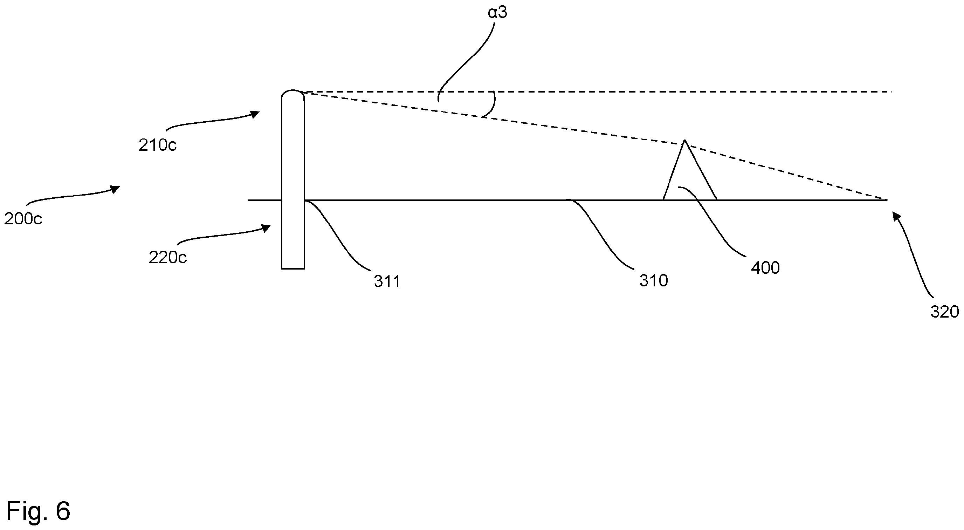

Die Figuren 5 und 6 zeigen eine schematische Darstellung eines Teils eines Querschnitts durch ein Rotorblatt mit einem Leuchtelement 200b, 200c. Das Rotorblatt weist an seiner Oberfläche 310, vorzugsweise an der Druck- und/oder Saugseite, eine Öffnung 311 auf, durch die das Leuchtelement 200b, 200c mit seinem Leuchtabschnitt 210b, 210c hinaus geführt ist. Der Anschlussabschnitt 220b, 220c des Leuchtelements 200b, 200c verbleibt im Inneren des Rotorblatts.

Die Leuchtelemente 200b, 200c unterscheiden sich hinsichtlich ihrer Abstrahlwinkel a2, a3. Während das Leuchtelement 220b gemäß Figur 5 einen Abstrahlwinkel α2 aufweist, der eine Anstrahlung der Oberfläche 310. Rotorblatts bis zur Rotorblattspitze 320 erlaubt, ist der Abstrahlwinkel α3 des Leuchtelements 200c gemäß Figur 6 ein anderer, so das hier im Ausführungsbeispiel gemäß Figur 6 auf der Oberfläche 310 des Rotorblatts ein Umlenkelement 400, beispielsweise in Form eines Prismas, angeordnet ist, welches angeordnet und ausgebildet ist, von dem Leuchtelement 200c empfangene Strahlung in Richtung der Oberfläche 310 des Rotorblatts, insbesondere in Richtung der Rotorblattspitze 320, umzulenken.

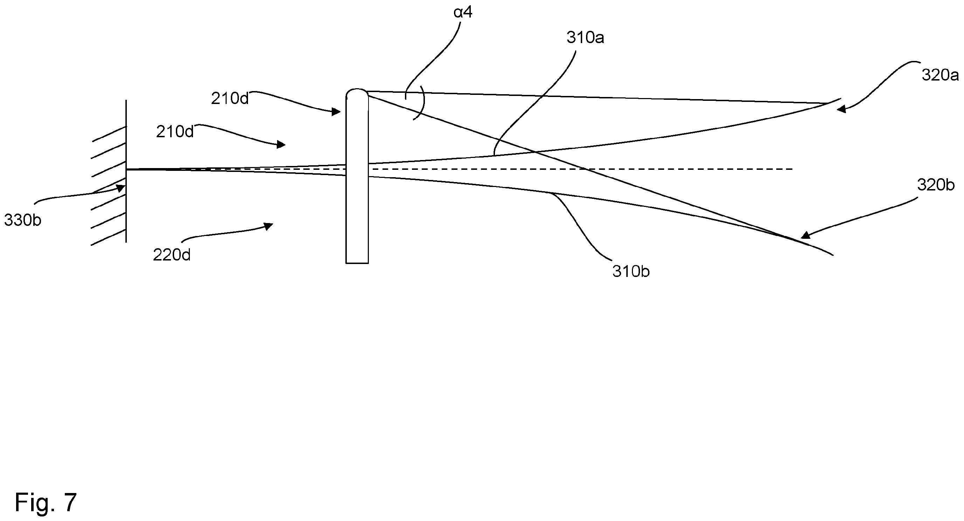

Figur 7 zeigt eine weitere schematische Darstellung eines Teils eines Querschnitts durch ein Rotorblatt mit einem Leuchtelement 200d, umfassend einen Leuchtabschnitt 210d und ein Anschlussabschnitt 220d. In Figur 7 ist die Oberfläche 310a, 310b des Rotorblatts einmal in der unbelasteten Position (310a) und einmal in der Position unter Volllast (310b) dargestellt, bei denen die Rotorblattspitzen 320a, 320b im Vergleich zur Rotorblattwurzel 330b unterschiedlich ausgelenkt sind. Der Abstrahlwinkel α4 des Leuchtelements 200d ist so gewählt, dass die Oberflächen 310a, 310b des Rotorblatts, insbesondere auch im Bereich der Rotorblattspitzen 320a, 320b, sowohl im unbelasteten Zustand als auch in der Situation unter Volllast angestrahlt werden.

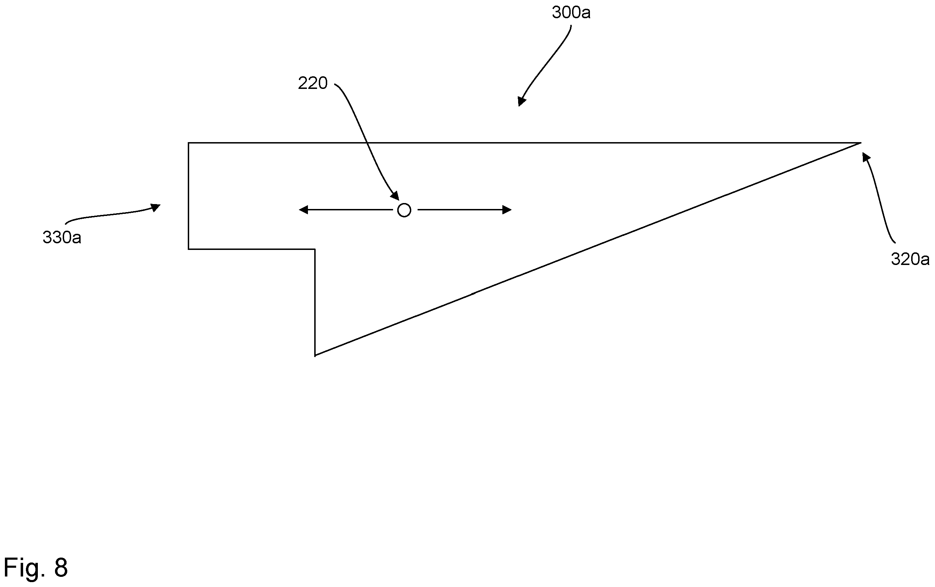

Figur 8 zeigt eine schematische Darstellung eines Längsschnitts durch eine beispielhafte Ausführungsform eines Rotorblatts 300a mit einer Rotorblattspitze 320a und einer Rotorblattwurzel 330a. Im Bereich von etwa einem Drittel der Längserstreckung des Rotorblatts 300a ist ein Leuchtelement 200 angeordnet. Mit den beiden Pfeilen ist angedeutet, dass das Leuchtelement 200 die Oberfläche des Rotorblatts 300a sowohl in Richtung der Rotorblattwurzel 330a als auch in Richtung der Rotorblattspitze 320a anstrahlt.

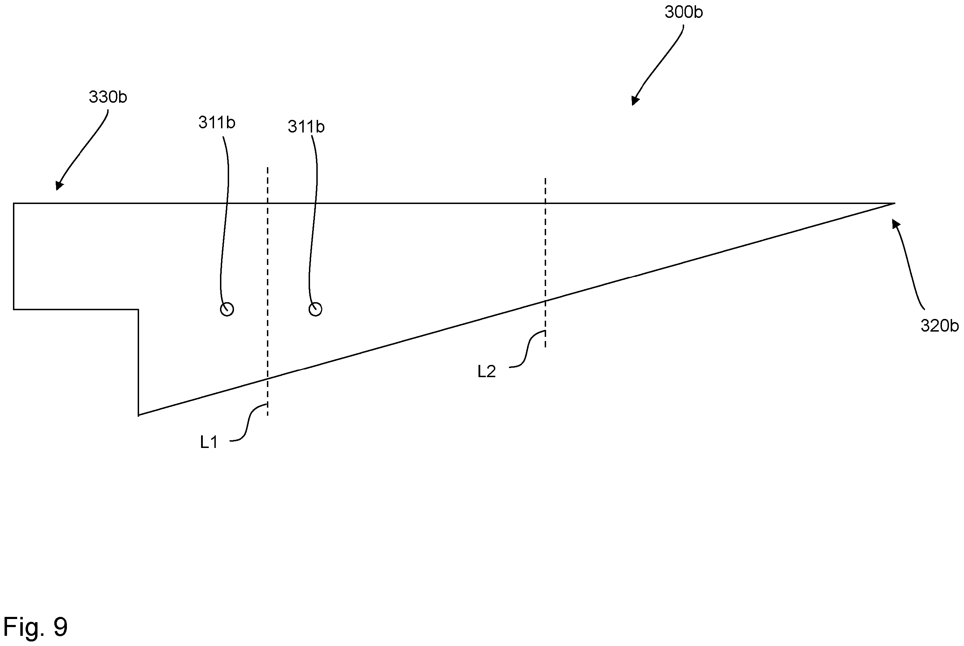

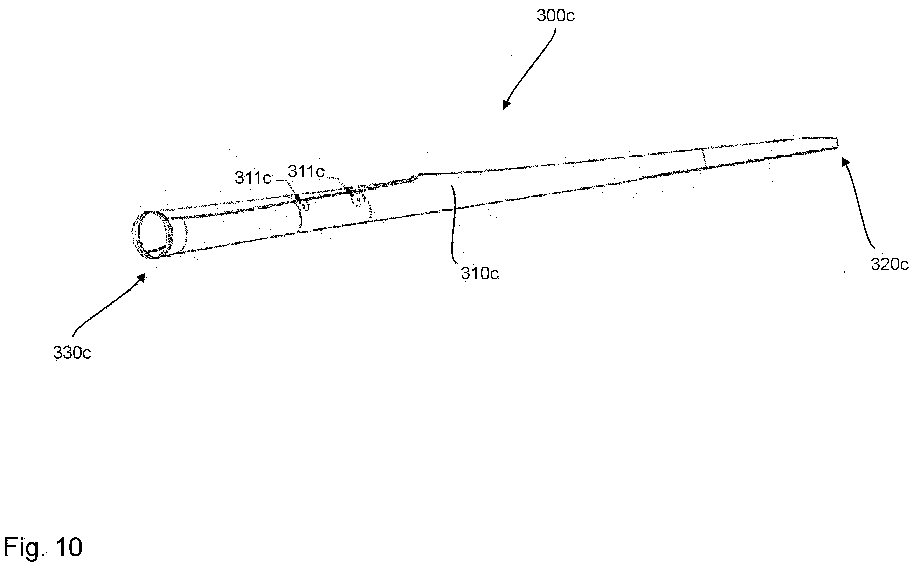

Figur 9 zeigt eine schematische Darstellung eines Längsschnitt durch eine weitere Ausführungsform eines Rotorblatts 300b mit einer Rotorblattspitze 320b und einer Rotorblattwurzel 330b sowie zwei Öffnungen 311b, in denen erfindungsgemäße Leuchtelemente angeordnet werden können. Wie auch in den Figuren 10-12 zu erkennen, sind die Öffnungen 311b vorzugsweise im Bereich der Heberippen angeordnet und insbesondere vorzugsweise sind die Öffnungen 311b identisch mit den Hebepunktöffnungen, die für den Transport und die Montage von Rotorblättern genutzt werden. Nach der Montage der Rotorblätter am Rotor der Windenergieanlage können dann eine oder mehrere Öffnungen 311b zu Beleuchtung mit einem erfindungsgemäßen Leuchtelement genutzt werden. Daher lassen sich auch existierende Windenergieanlagen einfach mit einem erfindungsgemäßen Leuchtelement nachrüsten.

Im Bereich L1 beträgt die lichte innere Höhe des Rotorblatts 300b in der Regel mehr als 1 m, so dass das Innere des Rotorblatts in diesem Bereich leicht durch Servicepersonal zugänglich ist, was für die Installation, Wartung, und/oder den Austausch von Leuchtelementen in den Öffnungen 300b besonders bevorzugt ist. Bis zum Bereich L2, der eine solche minimale lichte innere Höhe aufweist, die noch von Servicepersonal begangen werden kann, insbesondere eine lichte innere Höhe von mindestens 80 cm, insbesondere mindestens 1 m, werden erfindungsgemäße Leuchtelemente besonders bevorzugt installiert.

In Figur 10 ist eine dreidimensionale Ansicht einer weiteren Ausführungsform eines Rotorblatts 300c mit einer Rotorblattspitze 320c und einer Rotorblattwurzel 330c dargestellt. Auch hier sind die Öffnungen 311c in der Oberfläche 310c des Rotorblatts 300c, welche zur Anordnung von erfindungsgemäßen Leuchtelementen bevorzugt sind, identisch mit den für den Transport und die Montage vorgesehenen Hebepunktöffnungen.

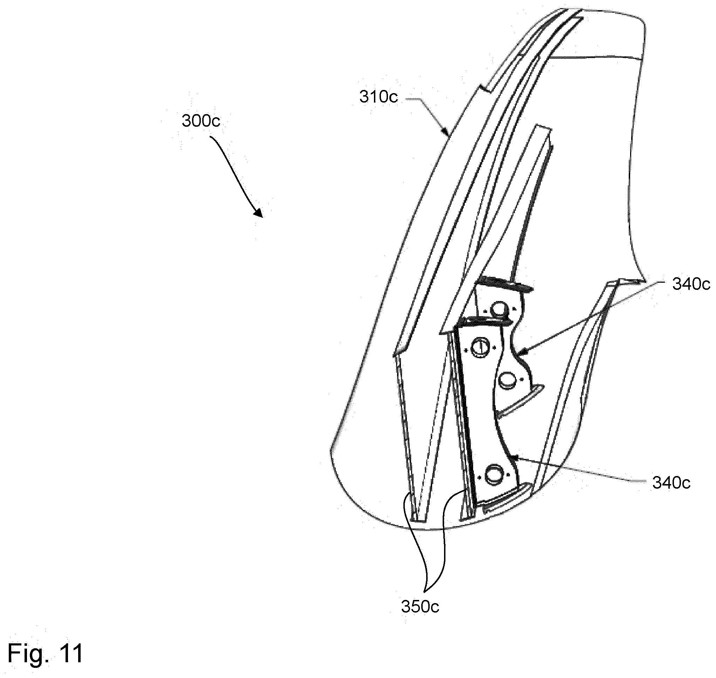

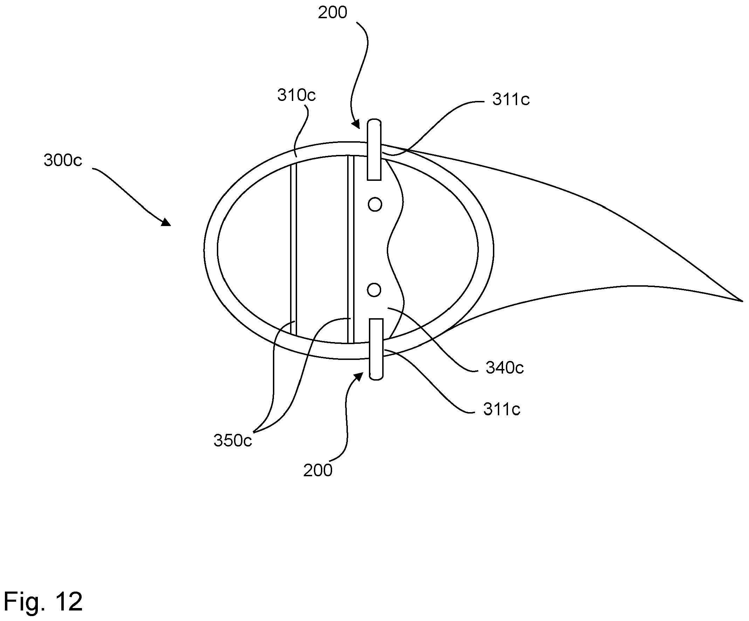

Figur 11 zeigt eine gebrochene dreidimensionale Ansicht eines Teils des Rotorblatts 300c gemäß Figur 10, Figur 12 einen schematischen Querschnitt des Rotorblatts gemäß Figur 10. Hier sind die Heberippen 340c zu erkennen, die an einem der Holmstege 350c angeordnet sind, wobei die Öffnungen 311c vorzugsweise im Bereich der Heberippen 340c angeordnet sind.

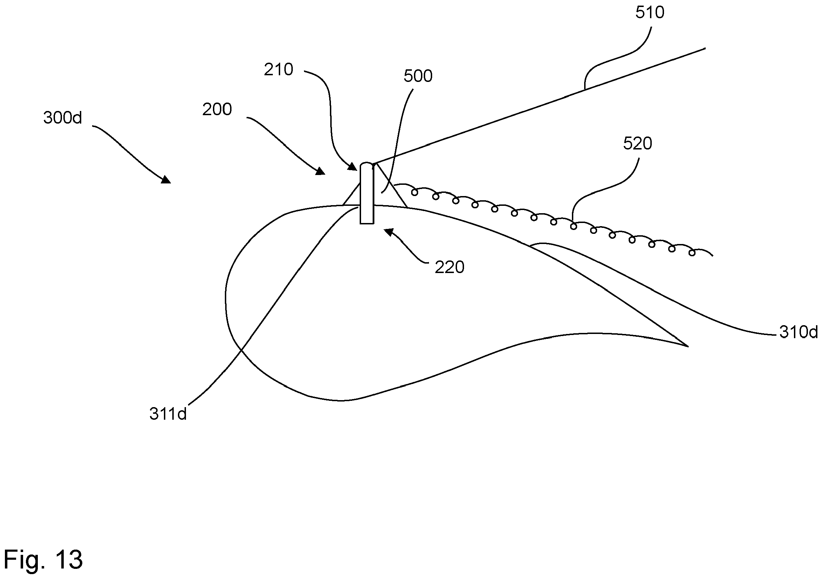

Figur 13 zeigt einen schematischen Querschnitt einer weiteren beispielhaften Ausführungsform eines Rotorblatts 300d. Auch hier ist in der Oberfläche 310d des Rotorblatts 300d eine Öffnung 311d vorgesehen, durch die ein Leuchtelement 200 geführt ist, um das Rotorblatt 300d von außen anzustrahlen, wie im Vorhergehenden beschrieben. Ferner weist das der Leuchtabschnitt 210 hier jedoch durch die Anordnung einer Verkleidung 500 in Form eines Vortex-Generators eine Außenform auf, die Wirbel 520 erzeugt und/oder einen Abriss einer Luftströmung 510 verhindert oder reduziert.

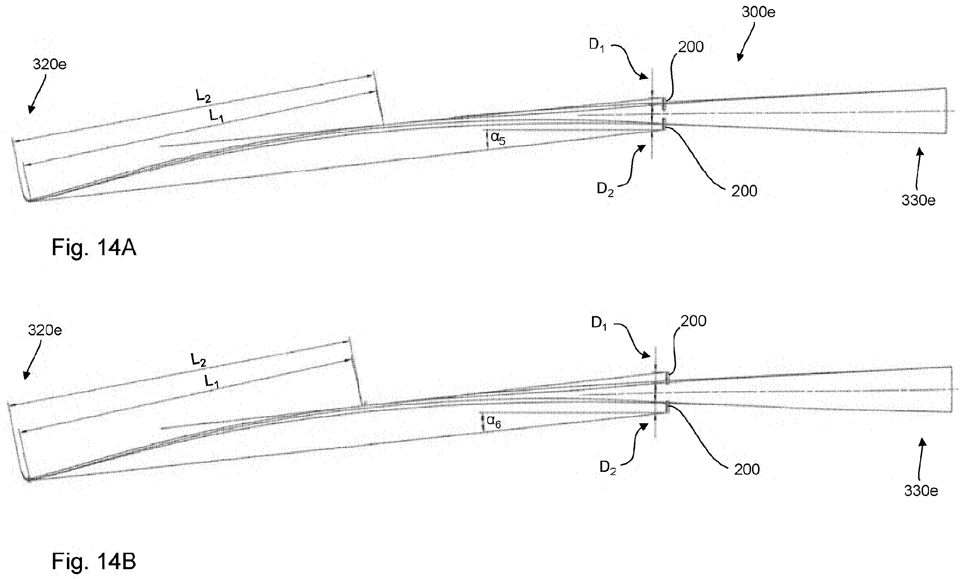

In den Figuren 14A und 14B sind zwei weitere beispielhafte Ausführungsformen eines Rotorblatts 300e im Querschnitt dargestellt, die sich von der Rotorblattwurzel 330e bis zur Rotorblattspitzen 320e erstrecken. In beiden Figuren 14A, B sind die Rotorblätter 300e in ausgelenktem Zustand dargestellt, bei welchen die Rotorblattspitze 320e deutlich von der Längsachse des Rotorblatts 300e ausgelenkt ist. Dieser Zustand kann auch als Durchbiegung bezeichnet werden. Bei beiden Rotorblättern 300e sind jeweils zwei Leuchtelemente 200 vorgesehen, wobei jeweils ein Leuchtelement auf der Saugseite und ein Leuchtelement auf der Druckseite angeordnet ist. Die beiden Rotorblätter 300e unterscheiden sich insbesondere durch die Anordnung der Leuchtelemente 200.

Die Leuchtelemente 200 des Rotorblatts 300e der Figuren 14A, B sind derart angeordnet, dass die Leuchtabschnitte um die Abstände D1 und D2 aus der Öffnung in der Oberfläche des Rotorblatts 300e herausragen. Die Anordnungen der Leuchtelemente 200 der Figuren 14A, B unterscheiden sich darin, dass die Abstände D1 und D2 der Anordnung gemäß Figur 14B größer sind als die Abstände D1 und D2 der Anordnung gemäß Figur 14A. Ferner ist der Abstrahlwinkel α5 mit vorzugsweise 6,5° größer als der Abstrahlwinkel α6 mit vorzugsweise 6,1°. Daraus ergibt sich, dass ein an die Rotorblattspitze 320e angrenzender Bereich L1 bzw. L2 (bis zur abgewinkelten Spitze) von den in den Figuren 14A, B oberen Leuchtelementen 200 nicht mehr angestrahlt wird. In Fällen, in denen die in den Figuren 14A, B dargestellte Situation die Blattvorspannung im Ruhezustand zeigt, kann sich im Betriebszustand die Durchbiegung des Rotorblatts umkehren, so das eine analoge oder ähnliche Situation wie in den Figuren 14A, B gezeigt entsteht, bei der jedoch ein an die Rotorblattspitze 320e angrenzender gegenüberliegender Bereich von den in den Figuren 14A, B unteren Leuchtelementen 200 nicht mehr angestrahlt wird.

Aufgrund der größeren Abstände des Leuchtabschnitts von der Oberfläche des Rotorblatts 320e in Figur 14B ergibt sich eine kürzere Länge L1 bzw. L2 als für die Anordnung der Leuchtelemente 200 gemäß Figur 14A.

Grundsätzlich ist es bevorzugt, dass die Anordnung der Leuchtelemente 200, insbesondere der Abstand, um den die Leuchtabschnitte aus der Bauteiloberfläche herausragen, der Abstrahlwinkel und die Bauteilgeometrie, insbesondere beispielsweise auch die Vorspannung und maximal Durchbiegung von Rotorblättern, so gewählt ist, dass nicht angestrahlte Bereiche wie die Bereiche L1 bzw. L2, möglichst minimiert werden. Bei nicht symmetrischer Durchbiegung beispielsweise von Rotorblättern im vorgespannten Zustand und im Betriebszustand kann es auch bevorzugt sein, die Leuchtelemente 200 auf der Saug- und Druckseite des Rotorblatts um unterschiedliche Abstände aus der Oberfläche herausragen zu lassen. Auf diese Weise kann einer unterschiedlichen Durchbiegung in verschiedenen Situationen Rechnung getragen werden.

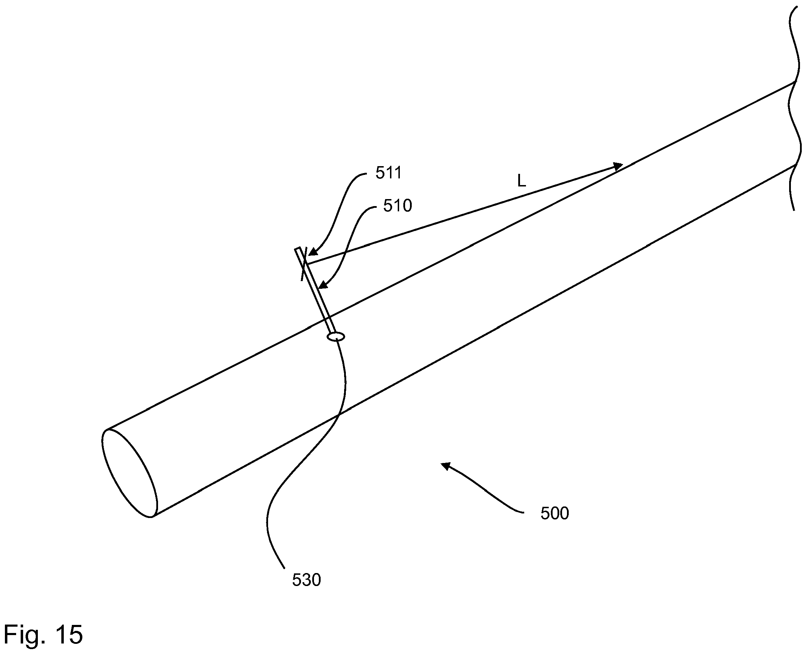

Figur 15 zeigt ein Rotorblatt 500 für eine Windenergieanlage mit einem Leuchtelement 510 dargestellt. Das Leuchtelement 510 is aus einer Öffnung 530 aus einem Inneren des Rotorblatts 500 herausgeführt. Die Öffnung 530 ist vorzugsweise Montageöffnung, die bei der Montage des Rotorblatts 500 an einer Windenergieanlage zur Aufnahme eines Hebezeugs dient. In Figur 15 ist schematisch eine Reflektionsfläche 511 angedeutet, mit der elektromagnetische Strahlung im Bereich von sichtbarem Licht und/oder im Bereich von Infrarotstrahlung reflektiert und/oder umgelenkt werden kann, um in Richtung des Pfeils L das Rotorblatt anzustrahlen, insbesondere in Richtung der Rotorblattspitze.

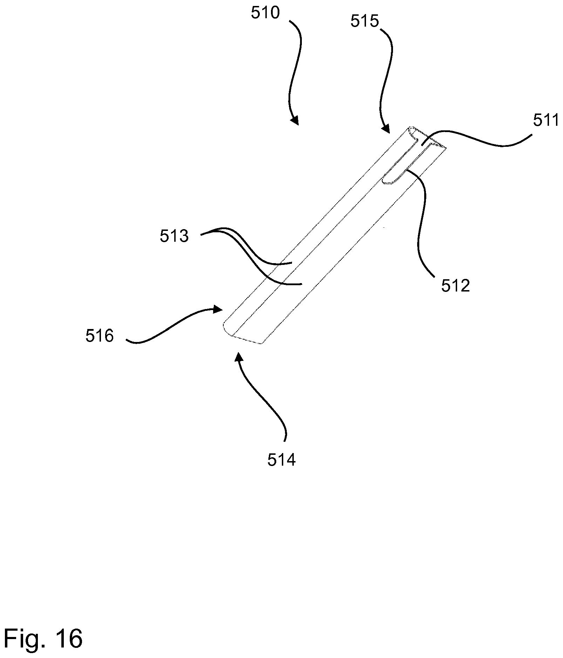

Eine mögliche Ausgestaltung des Leuchtelements 510 ist in Figur 16 dargestellt. Das Leuchtelement 510 hat einen Leuchtabschnitt 515 und einen Anschlussabschnitt 516. Mit dem Anschlussabschnitt 516 kann das Leuchtelement 510 im Inneren eines Rotorblatts, insbesondere an einer Öffnung 530, 500 angeschlossen, zum Beispiel befestigt, werden.

Das Leuchtelement 510 ist frei von elektrischen Bauelementen, wie Leuchtquellen, jedoch angeordnet und ausgebildet, eine elektromagnetische Strahlung im Bereich von sichtbarem Licht und/oder im Bereich von Infrarotstrahlung umzulenken und/oder zu reflektieren. Hierzu weist das Leuchtelement 510 eine Reflektionsfläche 511 auf. Das Leuchtelement 510 ist als passives, reflektierendes Bauteil ausgebildet, so kann eine Leuchtquelle etwa beabstandet vom Leuchtelement angeordnet sein, beispielsweise im Inneren des Rotorblatts. Dies hat unter anderem den Vorteil, dass die Gefahr von Blitzschäden reduziert werden kann. Als Leuchtquelle kann vorzugsweise eine Infrarot-LED zum Einsatz kommen.

Von der Reflektionsfläche 511 des Leuchtelements 510 zu reflektierende und/oder umzulenkende elektromagnetische Strahlung im Bereich von sichtbarem Licht und/oder im Bereich von Infrarotstrahlung kann beispielsweise durch eine Stirnseite 514 in das Innere des als Hohlstab bzw. hohlstabförmig ausgebildeten Leuchtelements 510 eintreten. Die Stirnseite 514 ist vorzugsweise aus einem Material ausgebildet, das den Durchtritt von elektromagnetischer Strahlung im Bereich von sichtbarem Licht und/oder im Bereich von Infrarotstrahlung erlaubt. Die Seiten 513 des Leuchtelements 510 können aus Material ausgebildet sein, das den Durchtritt von elektromagnetischer Strahlung im Bereich von sichtbarem Licht und/oder im Bereich von Infrarotstrahlung verhindern oder deutlich reduzieren.

Das Leuchtelement 510, insbesondere der Leuchtabschnitt 515, umfasst ferner einen schlitzförmigen Leuchtbereich 512, der hier als Ausnehmung ausgebildet ist. Auf diese Weise kann der Austritt von elektromagnetischer Strahlung im Bereich von sichtbarem Licht und/oder im Bereich von Infrarotstrahlung auf den Leuchtbereich fokussiert werden, wodurch sich eine besonders fokussierte Beleuchtung ergeben kann. Alternativ zur offenen Ausgestaltung in Form einer Ausnehmungkann ein solcher Leuchtbareich beispielsweise auch aus einem Material bestehen, das den Durchtritt von elektromagnetischer Strahlung im Bereich von sichtbarem Licht und/oder im Bereich von Infrarotstrahlung erlaubt.

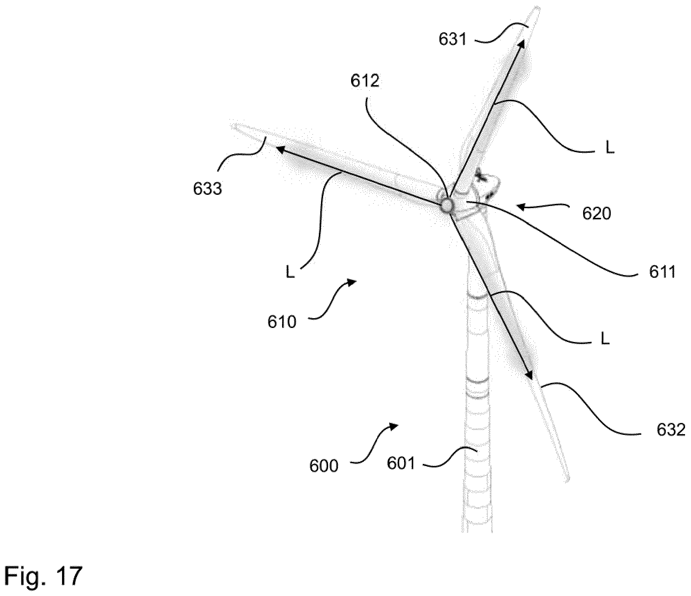

In Figur 17 ist eine Windenergieanlage 600 mit Beleuchtung vom Spinner 611 aus dargestellt. Die Windenergieanlage 600 weist einen Turm 601 und eine Gondel 620 auf. An der Gondel 620 ist ein (aerodynamischer) Rotor 610 mit drei Rotorblättern 631, 632, 633 und einem Spinner 611 angeordnet. Der Rotor 610 wird im Betrieb durch den Wind in eine Drehbewegung versetzt und treibt dadurch einen Generator (mit einem elektrodynamischen Generator-Rotor und einem Stator, beides nicht dargestellt) in der Gondel 620 an. Im hier dargestellten Beispiel weist der Spinner 611 eine oder mehrere Öffnungen auf, durch die eine oder mehrere Leuchtquellen 612, vorzugsweise Infrarot-LED, elektromagnetische Strahlung, vorzugsweise im Bereich von Infrarotstrahlung, in Richtung Pfeile L abzugeben, um insbesondere die Spitzen der Rotorblätter 631, 632, 633, anzustrahlen.

## Patentansprüche

1. Verwendung einer Montageöffnung eines Rotorblatts, die bei der Montage des Rotorblatts an einer Windenergieanlage zur Aufnahme eines Hebezeugs dient, als Öffnung zur Aufnahme eines Leuchtelements zur Beleuchtung eines Rotorblatts, insbesondere während des Betriebs der Windenergieanlage,
wobei das Leuchtelement umfasst
- einen Leuchtabschnitt und einen Anschlussabschnitt,
- wobei der Anschlussabschnitt angeordnet und ausgebildet ist, in einem Inneren des Rotorblatts angeschlossen zu werden, und
- der Leuchtabschnitt angeordnet und ausgebildet ist, aus der Öffnung des Rotorblatts herauszuragen, und
- der Leuchtabschnitt angeordnet und ausgebildet ist, das Rotorblatt, aus dem er herausragt, anzustrahlen.

2. Verwendung nach dem vorhergehenden Anspruch,
**dadurch gekennzeichnet, dass** der Leuchtabschnitt angeordnet und ausgebildet ist, das Rotorblatt, aus dem er herausragt, mit einer elektromagnetischen Strahlung im Bereich von sichtbarem Licht und/oder im Bereich von Infrarotstrahlung anzustrahlen.

3. Verwendung nach mindestens einem der vorhergehenden Ansprüche,
**dadurch gekennzeichnet, dass** der Leuchtabschnitt eine oder mehrere Leuchtdioden aufweist.,
und/oder
**dadurch gekennzeichnet, dass** der Leuchtabschnitt eine aerodynamische Außenform aufweist, beispielsweise eine Tropfenform,
und/oder
**dadurch gekennzeichnet, dass** der Leuchtabschnitt eine Außenform aufweist, die Wirbel erzeugt und/oder einen Abriss eine Luftströmung verhindert oder reduziert.,
und/oder
**dadurch gekennzeichnet, dass** das Leuchtelement zwischen dem Leuchtabschnitt und dem Anschlussabschnitt einen Dichtungsabschnitt aufweist, der ausgebildet und angeordnet ist, die Öffnung des Rotorblatts, aus dem das Leuchtelement herausragt, dichtend zu verschließen.

4. Verwendung nach mindestens einem der vorhergehenden Ansprüche,
**dadurch gekennzeichnet, dass** das Leuchtelement als Stableuchte und/oder Tellerleuchte ausgebildet ist.

5. Verwendung nach mindestens einem der vorhergehenden Ansprüche,
**dadurch gekennzeichnet, dass** der Leuchtabschnitt eine abgerundete und/oder geneigte Strahlfläche aufweist, und/oder **dadurch gekennzeichnet, dass** der Leuchtabschnitt, insbesondere eine Strahlfläche des Leuchtabschnitts, um einen vorbestimmten Abstand aus dem Rotorblatt herausragt, und/oder
**gekennzeichnet durch** eine Blitzschutzvorrichtung und/oder eine Heizvorrichtung.

6. Verwendung nach mindestens einem der vorhergehenden Ansprüche,
**dadurch gekennzeichnet, dass** das Leuchtelement angeordnet und ausgebildet ist, eine elektromagnetische Strahlung im Bereich von sichtbarem Licht und/oder im Bereich von Infrarotstrahlung umzulenken und/oder zu reflektieren.

7. Verwendung nach mindestens einem der vorhergehenden Ansprüche,
**dadurch gekennzeichnet, dass** das Leuchtelement eine Reflektionsfläche aufweist, und/oder
**dadurch gekennzeichnet, dass** Leuchtelement frei von elektrischen Bauelementen ist.

8. Leuchtelement zur Beleuchtung eines Rotorblatts einer Windenergieanlage, umfassend
- einen Leuchtabschnitt und einen Anschlussabschnitt,
- wobei der Anschlussabschnitt angeordnet und ausgebildet ist, in einem Inneren des Rotorblatts angeschlossen zu werden, und
- der Leuchtabschnitt angeordnet und ausgebildet ist, aus einer Öffnung des Rotorblatts, die bei der Montage des Rotorblatts an einer Windenergieanlage zur Aufnahme eines Hebezeugs dient, herauszuragen, und
- der Leuchtabschnitt angeordnet und ausgebildet ist, das Rotorblatt, aus dem er herausragt, anzustrahlen,
- wobei der Leuchtabschnitt eine Verkleidung in Form eines Vortexgenerators aufweist.

9. Rotorblatt für eine Windenergieanlage umfassend
- eine Öffnung, insbesondere eine Montageöffnung, die bei der Montage des Rotorblatts an einer Windenergieanlage zur Aufnahme eines Hebezeugs dient,
- ein Leuchtelement , dessen Leuchtabschnitt aus der Öffnung herausragt,
wobei das Leuchtelement umfasst
- einen Leuchtabschnitt und einen Anschlussabschnitt,
- wobei der Anschlussabschnitt angeordnet und ausgebildet ist, in einem Inneren des Rotorblatts angeschlossen zu werden, und
- der Leuchtabschnitt angeordnet und ausgebildet ist, aus der Öffnung des Rotorblatts herauszuragen, und
- der Leuchtabschnitt angeordnet und ausgebildet ist, das Rotorblatt, aus dem er herausragt, anzustrahlen.

10. Rotorblatt nach dem vorhergehenden Anspruch,
**dadurch gekennzeichnet, dass** es zwei, drei oder mehrere Öffnungen, insbesondere zwei, drei oder mehrere Montageöffnungen und zwei, drei oder mehrere Leuchtelemente aufweist,
und/oder
**dadurch gekennzeichnet, dass** die Öffnung in einem von Servicepersonal von innen begehbaren Bereich des Rotorblatts angeordnet ist, und/oder
**dadurch gekennzeichnet, dass** das Rotorblatt ein Umlenkelement aufweist, welches angeordnet und ausgebildet ist, von dem Leuchtelement empfangene Strahlung umzulenken, insbesondere in Richtung des Rotorblatts.

11. Windenergieanlage, umfassend
- ein Rotorblatt nach mindestens einem der beiden vorhergehenden Ansprüche.

12. Verfahren zur Beleuchtung eines Rotorblatts einer Windenergieanlage, umfassend:
- Montage des Rotorblatts an einer Windenergieanlage unter Nutzung von mindestens einer Montageöffnung in dem Rotorblatt,
- Bereitstellen eines Leuchtelements umfassend einen Leuchtabschnitt und einen Anschlussabschnitt, wobei
∘ der Anschlussabschnitt angeordnet und ausgebildet ist, in einem Inneren des Rotorblatts angeschlossen zu werden, und
∘ der Leuchtabschnitt angeordnet und ausgebildet ist, aus der Öffnung des Rotorblatts herauszuragen, und
∘ der Leuchtabschnitt angeordnet und ausgebildet ist, das Rotorblatt, aus dem er herausragt, anzustrahlen,
- Herausführen des Leuchtabschnitts aus der Montageöffnung ,
- Anstrahlen des Rotorblatts aus dem der Leuchtabschnitt herausragt, mit dem Leuchtabschnitt.

## Claims

1. The use of an assembly opening of a rotor blade, which serves for receiving a hoist when assembling the rotor blade on a wind power installation, as an opening for receiving a lighting element for illuminating a rotor blade, in particular during the operation of the wind power installation,
wherein the lighting element comprises
- a lighting portion and a connection portion,
- wherein the connection portion is arranged and embodied to be connected in an interior of the rotor blade, and
- the lighting portion is arranged and embodied to protrude from the opening of the rotor blade, and
- the lighting portion is arranged and embodied to irradiate the rotor blade from which it protrudes.

2. The use as claimed in the preceding claim,
**characterized in that** the lighting portion is arranged and embodied to irradiate the rotor blade from which it protrudes with an electromagnetic radiation in the range of visible light and/or in the range of infrared radiation.

3. The use as claimed in at least one of the preceding claims,
**characterized in that** the lighting portion has one or more light-emitting diodes,
and/or
**characterized in that** the lighting portion has an aerodynamic external form, for example a droplet form,
and/or
**characterized in that** the lighting portion has an external form that produces vortices and/or prevents or reduces a stall in an airflow,
and/or
**characterized in that** the lighting element has a sealing portion between the lighting portion and the connection portion, the sealing portion being embodied and arranged to close off the opening of the rotor blade from which the lighting element protrudes in sealing fashion.

4. The use as claimed in at least one of the preceding claims,
**characterized in that** the lighting element is embodied as a bar-type lamp and/or plate-type lamp.

5. The use as claimed in at least one of the preceding claims,
**characterized in that** the lighting portion has a rounded and/or inclined emission surface, and/or
**characterized in that** the lighting portion, in particular an emission surface of the lighting portion, protrudes from the rotor blade by a predetermined distance, and/or
**characterized by** a lightning protection apparatus and/or a heating apparatus.

6. The use as claimed in at least one of the preceding claims,
**characterized in that** the lighting element is arranged and embodied to deflect and/or reflect electromagnetic radiation in the range of visible light and/or in the range of infrared radiation.

7. The use as claimed in at least one of the preceding claims,
**characterized in that** the lighting element has a reflection surface, and/or **characterized in that** the lighting element is free from electrical component parts.

8. A lighting element for illuminating a rotor blade of a wind power installation, comprising
- a lighting portion and a connection portion,
- wherein the connection portion is arranged and embodied to be connected in an interior of the rotor blade, and
- the lighting portion is arranged and embodied to protrude from an opening of the rotor blade, which serves for receiving a hoist when assembling the rotor blade on a wind power installation, and
- the lighting portion is arranged and embodied to irradiate the rotor blade from which it protrudes,
- wherein the lighting portion has a cladding in the form of a vortex generator.

9. A rotor blade for a wind power installation, comprising
- an opening, in particular an assembly opening, which serves to receive a hoist when assembling the rotor blade on a wind power installation,
- a lighting element, the lighting portion of which protrudes from the opening,
wherein the lighting element comprises
- a lighting portion and a connection portion,
- wherein the connection portion is arranged and embodied to be connected in an interior of the rotor blade, and
- the lighting portion is arranged and embodied to protrude from the opening of the rotor blade, and
- the lighting portion is arranged and embodied to irradiate the rotor blade from which it protrudes.

10. The rotor blade as claimed in the preceding claim,
**characterized in that** it has two, three or more openings, in particular two, three or more assembly openings and two, three or more lighting elements, and/or two, three or more functional elements,
and/or
**characterized in that** the opening is arranged in a region of the rotor blade that is walkable on the inside by service staff,
and/or
**characterized in that** the rotor blade has a deflection element arranged and embodied to deflect radiation received from the lighting element in the direction of the rotor blade, in particular.

11. A wind power installation comprising
- a rotor blade as claimed in at least one of the two preceding claims.

12. A method for illuminating a rotor blade of a wind power installation, comprising:
- assembling the rotor blade on a wind power installation using of at least one assembly opening in the rotor blade,
- providing a lighting element comprising a lighting portion and a connection portion, wherein
∘ the connection portion is arranged and embodied to be connected in an interior of the rotor blade, and
∘ the lighting portion is arranged and embodied to protrude from the opening of the rotor blade, and
∘ the lighting portion is arranged and embodied to irradiate the rotor blade from which it protrudes,
- guiding the lighting portion out of the assembly opening,
- irradiating the rotor blade from which the lighting portion protrudes by the lighting portion.

## Revendications

1. Utilisation d'une ouverture de montage d'une pale de rotor, qui sert, lors du montage de la pale de rotor au niveau d'une éolienne, à loger un engin de levage, en tant qu'ouverture servant à loger un élément lumineux servant à éclairer une pale de rotor, en particulier pendant le fonctionnement de l'éolienne,
dans laquelle l'élément lumineux comprend
- une section lumineuse et une section de raccordement,
- dans laquelle la section de raccordement est disposée et réalisée pour être raccordée dans un espace intérieur de la pale de rotor, et
- la section lumineuse est disposée et réalisée pour dépasser hors de l'ouverture de la pale de rotor, et
- la section lumineuse est disposée et réalisée pour illuminer la pale de rotor, de laquelle elle dépasse.

2. Utilisation selon la revendication précédente,
**caractérisée en ce que** la section lumineuse est disposée et réalisée pour illuminer la pale de rotor, de laquelle elle dépasse, avec un rayonnement électromagnétique dans la plage de la lumière visible et/ou dans la plage du rayonnement infrarouge.

3. Utilisation selon au moins l'une quelconque des revendications précédentes,
**caractérisée en ce que** la section lumineuse présente une ou plusieurs diodes électroluminescentes,
et/ou
**caractérisée en ce que** la section lumineuse présente une forme extérieure aérodynamique, par exemple une forme de goutte,
et/ou
**caractérisée en ce que** la section lumineuse présente une forme extérieure, qui génère des tourbillons et/ou un contour, qui empêche ou réduit un écoulement d'air,
et/ou
**caractérisée en ce que** l'élément lumineux présente entre la section lumineuse et la section de raccordement une section d'étanchéité, qui est réalisée et disposée pour fermer de manière étanche l'ouverture de la pale de rotor, de laquelle l'élément lumineux dépasse.

4. Utilisation selon au moins l'une quelconque des revendications précédentes,
**caractérisée en ce que** l'élément lumineux est réalisé en tant qu'une lampe en forme de tube et/ou une lampe en forme de disque.

5. Utilisation selon au moins l'une quelconque des revendications précédentes,
**caractérisée en ce que** la section lumineuse présente une surface d'émission arrondie et/ou inclinée, et/ou
**caractérisée en ce que** la section lumineuse, en particulier une surface d'émission de la section lumineuse, dépasse hors de la pale de rotor d'une distance prédéfinie, et/ou
**caractérisée par** un dispositif de protection contre la foudre et/ou un dispositif de chauffage.

6. Utilisation selon au moins l'une quelconque des revendications précédentes,
**caractérisée en ce que** l'élément lumineux est disposé et réalisé pour dévier et/ou réfléchir un rayonnement électromagnétique dans la plage de la lumière visible et/ou dans la plage du rayonnement infrarouge.

7. Utilisation selon au moins l'une quelconque des revendications précédentes,
**caractérisée en ce que** l'élément lumineux présente une surface réfléchissante, et/ou
**caractérisée en ce que** l'élément lumineux est sans composants électriques.

8. Elément lumineux servant à éclairer une pale de rotor d'une éolienne, comprenant
- une section lumineuse et une section de raccordement,
- dans lequel la section de raccordement est disposée et réalisée pour être raccordée dans un espace intérieur de la pale de rotor, et
- la section lumineuse est disposée et réalisée pour dépasser hors d'une ouverture de la pale de rotor, qui sert lors du montage de la pale de rotor au niveau d'une éolienne à loger un engin de levage, et
- la section lumineuse est disposée et réalisée pour illuminer la pale de rotor, de laquelle elle dépasse,
- dans lequel la section lumineuse présente un habillage sous la forme d'un générateur de tourbillons.

9. Pale de rotor pour une éolienne, comprenant
- une ouverture, en particulier une ouverture de montage, qui sert, lors du montage de la pale de rotor au niveau d'une éolienne, à loger un engin de levage,
- un élément lumineux, dont la section lumineuse dépasse hors de l'ouverture,
dans laquelle l'élément lumineux comprend
- une section lumineuse et une section de raccordement,
- dans laquelle la section de raccordement est disposée et réalisée pour être raccordée dans un espace intérieur de la pale de rotor, et
- la section lumineuse est disposée et réalisée pour dépasser hors de l'ouverture de la pale de rotor, et
- la section lumineuse est disposée et réalisée pour illuminer la pale de rotor, de laquelle elle dépasse.

10. Pale de rotor selon la revendication précédente,
**caractérisée en ce qu'**elle présente deux, trois ou plusieurs ouvertures, en particulier deux, trois ou plusieurs ouvertures de montage, et deux, trois ou plusieurs éléments lumineux,
et/ou
**caractérisée en ce que** l'ouverture est disposée dans une zone, pouvant être empruntée de l'intérieur par le personnel d'entretien, de la pale de rotor,
et/ou
**caractérisée en ce que** la pale de rotor présente un élément de déviation, lequel est disposé et réalisé pour dévier un rayonnement reçu par l'élément lumineux, en particulier en direction de la pale de rotor.

11. Eolienne, comprenant
- une pale de rotor selon au moins l'une quelconque des deux revendications précédentes.

12. Procédé servant à éclairer une pale de rotor d'une éolienne, comprenant :
- le montage de la pale de rotor au niveau d'une éolienne en utilisant au moins une ouverture de montage dans la pale de rotor,
- la fourniture d'un élément lumineux comprenant une section lumineuse et une section de raccordement, dans lequel
- - la section de raccordement est disposée et réalisée pour être raccordée dans un espace intérieur de la pale de rotor, et
- - la section lumineuse est disposée et réalisée pour dépasser de l'ouverture de la pale de rotor, et
- - la section lumineuse est disposée et réalisée pour illuminer la pale de rotor, de laquelle elle dépasse,
- le guidage de la section lumineuse hors de l'ouverture de montage,
- l'illumination de la pale de rotor, de laquelle la section lumineuse dépasse, avec la section lumineuse.
